# EUROPÄISCHE PATENTSCHRIFT

(11) **EP 4 186 876 B1**
(45) Veröffentlichungstag und Bekanntmachung des Hinweises auf die Patenterteilung: **27.03.2024**
(21) Anmeldenummer: 22210156.0
(22) Anmeldetag: 29.11.2022
(51) Int. Cl.: C03B 40/027

(54) **IS-MASCHINE ZUR HERSTELLUNG VON GLASBEHÄLTERN UND VERFAHREN ZUM BETREIBEN EINER SOLCHEN IS-MASCHINE**
IS MACHINE FOR PRODUCING GLASS CONTAINERS AND METHOD FOR OPERATING SUCH AN IS MACHINE
MACHINE IS POUR LA FABRICATION DE RÉCIPIENTS EN VERRE ET PROCÉDÉ DE FONCTIONNEMENT D'UNE TELLE MACHINE IS

(30) Priorität: 30.11.2021 DE 102021131486
(43) Veröffentlichungstag der Anmeldung: 31.05.2023
(73) Patentinhaber: Heye International GmbH, 31683 Obernkirchen (DE)
(72) Erfinder: Lunacek, Matthias, 31683 Obernkirchen (DE); Wallbaum, Mirko, 31683 Obernkirchen (DE); Stäblein, Maximilian, 32427 Minden (DE); Felgenhauer, Benedikt, 32049 Herford (DE)
(74) Vertreter: Michalski Hüttermann & Partner Patentanwälte mbB

(56) Entgegenhaltungen:
- US-A1- 2009 173 105
- US-A1- 2011 296 874

## Beschreibung

Die Erfindung betrifft eine IS-Maschine für die Herstellung von Glasbehältern, mit einer Mehrzahl von Stationen, die jeweils eine Vorform und eine Fertigform aufweisen, und einem Schmierwerkzeug zum Schmieren wenigstens eines Teils der Vorformen mit einem Schmierstoff, wobei das Schmierwerkzeug einen Sprühkopf zum Versprühen des Schmierstoffs und einen Roboteranschluss aufweist, an dem der Sprühkopf befestigt ist und mittels dem der Sprühkopf innerhalb der IS-Maschine zwischen verschiedenen Stationen bewegbar ist. Die Erfindung betrifft außerdem ein Verfahren zum Betreiben einer solchen IS-Maschine.

IS-Maschinen für die Herstellung von Glasbehältern sind aus dem Stand der Technik gut bekannt und werden typischerweise in einem Blas-Blas-Verfahren betrieben. Dazu wird Glas in einer Schmelzwanne verflüssigt und fließt aus der Schmelzwanne in einen Feeder. Am Kopf des Feeders wird mittels einer Speisermaschine ein länglicher Glastropfen ausgebildet. Dieser Glastropfen wird über eine Rinne durch einen aufgeschwenkten Trichtermechanismus hindurch in eine Vorform geleitet. Die spätere Mündung des herzustellenden Glasbehälters zeigt dabei nach unten. Dann setzt ein Vorformboden auf dem Trichtermechanismus auf und schließt die Vorform. Von oben wird Druckluft eingeblasen, damit die aufgrund des Glastropfens bereitgestellte Glasmasse eine unten an der Vorform sitzende Mündungsform ganz ausfüllt. Dieser Schritt wird als Niederblasen bezeichnet. Dann schwenken der Vorformboden und anschließend der Trichtermechanismus zurück und die Vorform wird mit dem Vorformboden oben verschlossen. In die dadurch unten entstandene Öffnung wird das Glas durch einströmende Druckluft zum Külbel vorgeblasen. Danach wird die Vorform geöffnet und das vorgeblasene Werkstück, also das Külbel, wird von einem Übergabemechanismus um 180° in die zugehörige offene Fertigform geschwenkt. Das Külbel wird dabei in einer Mündungsform gehalten. Die Mündung befindet sich nun oben. Dann wir die Mündungsform geöffnet und der Übergabemechanismus schwenkt zurück in die Ausgangsposition, um das nächste Külbel in der Vorform aufzunehmen. Währenddessen wird die Fertigform von oben durch einen Blaskopf verschlossen, um das Külbel in der Fertigform durch Druckluft zu seiner Endform fertigzublasen. Danach schwenkt der Blaskopf zurück, die Fertigform wird geöffnet und ein Greifer befördert das fertige Werkstück auf eine Absetzplatte. In der Regel schiebt ein weiterer Mechanismus das fertige Werkstück dann auf ein Band, das den Artikel in einen Kühlbereich befördert.

Die Flächen der Vorform, die mit dem schmelzflüssigen Glas unmittelbar in Berührung gelangen, bedürfen mit Hinblick auf eine gleichmäßige, im Zeitablauf konstante Produktqualität einer Schmierung, um beim Einbringen des Glaswerkstoffs in die Vorform eine gleichmäßige Verteilung innerhalb des Formhohlraums zu gewährleisten und nach erfolgter Formgebung ein Lösen des mechanisch noch instabilen Külbels aus der Vorform zu erleichtern. Dazu ist es z.B. aus der EP 3 190 093 A1 bekannt, sich eines Schmierwerkzeugs zum Schmieren wenigstens eines Teils der Vorformen mit einem Schmierstoff, z.B. in Form eines Schmierroboters, zu bedienen. Ein solcher Schmierroboter kann grundsätzlich zum Schmieren aller Vorformen eingesetzt werden. Es ist aber auch möglich, dass ein solcher Schmierroboter nur einen Teil der Vorformen schmiert, so dass für die anderen Vorformen der IS-Maschine wenigstens ein weiterer Schmierroboter vorgesehen ist.

Es ist weiterhin aus der Praxis bekannt, dass das Schmierwerkzeug einen an einer Sprühkopfhalterung angeordneten Sprühkopf zum Versprühen des Schmierstoffs und einen Roboteranschluss aufweist, an dem die Sprühkopfhalterung befestigt ist und mit dem das Schmierwerkzeug an einen Roboter angeschlossen werden kann, so dass der Sprühkopf mittels des Roboters innerhalb der IS-Maschine zwischen verschiedenen Stationen bewegbar ist. Das Schmierwerkzeug kann freilich auch eine Mehrzahl von Sprühköpfen aufweisen, die an der Sprühkopfhalterung angeordnet sind. Dabei kann die Sprühkopfhalterung mit Sollbruchstellen versehen sein, an denen im Fall einer Kollision mit den Mechanismen der Station, an dem sich das Schmierwerkzeug gerade befindet, die Sprühkopfhalterung zerbricht. Auf diese Weise wird eine Unterbrechung des Kraftflusses erzielt, so dass der Roboter keinen Schaden nehmen kann.

Im Kollisionsfall kommt es also zu einer mechanischen Zerstörung der Sprühkopfhalterung, was einen Austausch der Sprühkopfhalterung und ggf. auch eine Erneuerung der Sprühkopfhalterung mit ihrem Sprühkopf erforderlich macht und somit Stillstandzeit für die entsprechende Station oder sogar für die gesamte IS-Maschine bedeutet. Dazu kommen die Kosten für den Ersatz der Sprühkopfhalterung und ggf. des Sprühkopfes sowie der entsprechende Montageaufwand.

Aus der US 2011/0296874 A1 ist ein Verfahren zur Herstellung eines Hohlglasprodukts mittels einer IS-Maschine und eines entlang ihrer Vorformenseite beweglichen Roboters bekannt, wobei der Roboter geeignet ist, eine oder mehrere Vorformen, Sektion für Sektion, auszuwechseln, einen Elektromagneten trägt und das Auswechseln einer Vorform das Schließen der beiden Halbschalen der Vorform durch Ausüben eines Druckes, den Einsatz des Elektromagneten, das Nachlassen des Druckes und ein anschließend das Lösen der Vorform umfasst. Außerdem ist der Roboter geeignet ist, mehrere Werkzeuge mit unterschiedlichen Funktionen zu tragen.

Ferner beschreibt die US 2009/173105 A1 ein Verfahren zur Herstellung eines hohlen Glasprodukts, bei dem mindestens eine Form verwendet wird, die zwei Formhälften umfasst, die an einem Ende auf einer Ringform geschlossen und am anderen Ende durch einen Deckel verschlossen sind, wobei das Verfahren das Schmieren mindestens einer der Formen in der geschlossenen Position der Formhälften auf der Ringform umfasst, wobei jedoch der Deckel das andere Ende nicht verschließt, wobei das Schmieren ein Sprühen durch ein Sprührohr umfasst, das sich in dem Hohlraum der Form bewegt, und dass das Sprührohr von einem Roboter getragen wird, der sich entlang der Rohform einer IS-Maschine bewegen kann.

Davon ausgehend ist es die Aufgabe der Erfindung, eine Möglichkeit bereitzustellen, den zum Manipulieren des Schmierwerkzeugs verwendeten Roboter zu schützen, ohne im Fall einer Kollision des Sprühkopfes mit einer Einrichtung der IS-Maschine einen hohen Montageaufwand zu haben.

Diese Aufgabe wird durch den Gegenstand der unabhängigen Patentansprüche gelöst. Bevorzugte Weiterbildungen finden sich in den Unteransprüchen.

Erfindungsgemäß wird somit eine IS-Maschine für die Herstellung von Glasbehältern bereitgestellt, mit einer Mehrzahl von Stationen, die jeweils eine Vorform und eine Fertigform aufweisen, und einem Schmierwerkzeug zum Schmieren wenigstens eines Teils der Vorformen mit einem Schmierstoff, wobei das Schmierwerkzeug einen Sprühkopf zum Versprühen des Schmierstoffs und einen Roboteranschluss aufweist, an dem der Sprühkopf befestigt ist und mittels dem der Sprühkopf innerhalb der IS-Maschine zwischen verschiedenen Stationen bewegbar ist, dadurch gekennzeichnet, dass der Sprühkopf mittels einer Kupplung reversibel lösbar an dem Roboteranschluss befestigt ist.

Es ist somit ein maßgeblicher Punkt der Erfindung, dass keine Sollbruchstellen mehr vorgesehen werden, um eine Beschädigung des Roboters bei einer Kollision zu vermeiden. Vielmehr sieht die Erfindung zwischen dem Sprühkopf und dem Roboteranschluss eine Kupplung vor, die sich im Fall einer Kollision öffnet, so dass der Sprühkopf vom Roboteranschluss getrennt wird und damit keine Kraftübertragung mehr auf den Roboteranschluss und damit auf den Roboter erfolgen kann. Diese Kupplung ist so ausgestaltet, dass der Sprühkopf von dem Roboteranschluss reversibel lösbar ist, was bedeutet, dass der Sprühkopf über die Kupplung wieder am Roboteranschluss befestigt werden kann, nämlich durch Schließen der Kupplung. Die Kupplung kann also reversibel geschlossen und geöffnet werden, was bedeutet, dass die Kupplung beim Öffnen keinen Schaden nimmt, so dass sie ohne Reparatur wieder geschlossen werden kann.

Es ist möglich, dass der Sprühkopf direkt mittels der Kupplung an dem Roboteranschluss befestigt ist. Vorzugsweise ist der Sprühkopf jedoch an einer Sprühkopfhalterung angeordnet, und die Sprühkopfhalterung ist mittels der Kupplung an dem Roboteranschluss befestigt. In diesem Fall ist der Sprühkopf also mittelbar an dem Roboteranschluss befestigt, nämlich über die Sprühkopfhalterung.

Grundsätzlich können für die Erfindung verschiedene Kupplungen verwendet werden, mit denen der Sprühkopf reversibel lösbar an dem Roboteranschluss befestigt wird. Gemäß einer bevorzugten Ausführungsform der Erfindung ist die Kupplung eine Magnetkupplung. Über die Stärke der für eine solche Magnetkupplung verwendeten Magneten kann eingestellt werden, bei welcher Krafteinwirkung auf den Sprühkopf dieser vom Roboteranschluss getrennt wird.

Gemäß einer alternativen bevorzugten Weiterbildung der Erfindung ist vorgesehen, dass die Kupplung eine Sicherheitskupplung mit einer Mechanik ist, die den Sprühkopf reversibel von dem Roboteranschluss löst, wenn auf den Sprühkopf eine Kraft wirkt, die einen vorbestimmten Kraftwert übersteigt. Eine solche Sicherheitskupplung kann z.B. nach dem Kugel-Rast-Prinzip aufgebaut sein. Der Sprühkopf ist dabei formschlüssig über Kugeln oder Rollen mit dem Roboteranschluss verbunden. Die Kupplungsnabe ist als Kugelkäfig ausgebildet und dient als Aufnahme eines Flanschringes, einer Schaltscheibe mit Tellerfeder und einer Einstellmutter. Die Kugeln oder Rollen werden mit einer eingestellten Federkraft in Senkbohrungen des Flanschrings gedrückt. Bei Überlast verdreht sich der Flanschring zur Käfignabe, die Kugeln werden aus der Kalotte gedrückt und der Sprühkopf vom Roboteranschluss getrennt.

Erfindungsgemäß ist vorgesehen, dass der Roboteranschluss mit einem Sensor versehen ist, mit dem erfassbar ist, ob die Kupplung geöffnet oder geschlossen ist. Dabei gilt, dass der Sensor mit einer Schalteinrichtung verbunden ist, mit der der Betrieb der Station beendbar ist oder eine Roboteraktion auslösbar ist, so dass sich der Roboter z.B. aus der Station zurückzieht, wenn mittels des Sensors festgestellt wird, dass die Kupplung geöffnet ist. Auf diese Weise kann einer Beschädigung des Sprühkopfes und des Roboters in der ansonsten weiter betriebenen Station entgegengewirkt werden. Diese Ausgestaltung ermöglicht auch, dass der Sprühkopf z.B. von einer Person händisch wieder an dem Roboteranschluss befestigt werden kann, so dass diese Station dann weiter betrieben werden kann. Insofern gilt in diesem Zusammenhang vorzugsweise, dass die Schalteinrichtung derart ausgestaltet und eingerichtet ist, dass der Betrieb der Station, an der sich der Sprühkopf gerade befindet, wieder ermöglicht wird, wenn mittels des Sensors festgestellt wird, dass die Kupplung wieder geschlossen ist. Ein Wiederinbetriebnahme der Station und/oder des Roboters erfolgt dabei aber vorzugsweise nicht automatisch, sondern erst nach Freigabe durch einen Anwender.

Für den Betrieb des Sprühkopfes ist in der Regel die Zuleitung von Schmierstoff und von Zerstäubungsluft erforderlich. Darüber hinaus kann die Sprühfunktion des Sprühkopfes über eine Luftzufuhr gesteuert sein, so dass es auch der Zufuhr von Steuerluft bedarf. Unter diesem Aspekt ist gemäß einer bevorzugten Weiterbildung der Erfindung vorgesehen, dass eine den Sprühkopf tragende Sprühkopfhalterung mit einer Steuerluftleitung, einer Schmierstoffleitung und/oder einer Zerstäubungsluftleitung versehen ist und wenigstens eine dieser Leitungen wenigstens teilweise im Inneren einer Sprühkopfhalterung verläuft, an der der Sprühkopf befestigt ist. Durch die Integration einer solchen Leitung in das Innere der Sprühkopfhalterung entfallen in den meisten Abschnitten der Sprühkopfhalterung Schlauchleitungen auf der Außenseite, die somit nicht den hohen Temperaturen ausgesetzt sind, die im Umfeld einer Station einer IS-Maschine herrschen. Eine vorzeitige Alterung solcher typischerweise aus nicht hochtemperaturbeständigem Kunststoff hergestellter Schlauchleitungen aufgrund von Temperatureinwirkungen ist somit kein Thema mehr. Darüber hinaus können bei einer Kollision solche Schlauchleitungen reißen oder Schlauchverbinder brechen, was zu unkontrolliertem Austreten von Druckluft bzw. Schmierstoff führen kann. Außerdem ist gemäß einer bevorzugten Weiterbildung der Erfindung vorgesehen, dass alle Leitungen vollständig im Inneren der Sprühkopfhalterung verlaufen, angrenzend an die Kupplung jeweils mit einem Anschluss versehen sind und an die Anschlüsse jeweils ein Schlauch angeschlossen ist, der auf seiner anderen Seite mit dem Roboteranschluss verbunden ist, um den Sprühkopf mit Steuerluft, Schmierstoff bzw. Zerstäubungsluft zu versorgen.

Die Erfindung betrifft auch ein Verfahren zum Betreiben einer IS-Maschine zur Herstellung von Glasbehältern, wobei die IS-Maschine eine Mehrzahl von Stationen, die jeweils eine Vorform und eine Fertigform aufweisen, und ein Schmierwerkzeug zum Schmieren wenigstens eines Teils der Vorformen mit einem Schmierstoff aufweist, wobei das Schmierwerkzeug einen Sprühkopf zum Versprühen des Schmierstoffs und einen Roboteranschluss aufweist, an dem der Sprühkopf mittels einer Kupplung reversibel lösbar befestigt ist, und der Roboteranschluss mit einem Sensor versehen ist, mit dem erfassbar ist, ob die Kupplung geöffnet oder geschlossen ist, mit folgenden Verfahrensschritten:
Bewegen des Sprühkopfs innerhalb der IS-Maschine zwischen verschiedenen Stationen und Schmieren einer jeweiligen Vorform,
Erfassen mittels des Sensors, ob die Kupplung geschlossen oder geöffnet ist, und
Beenden des Betriebs der Station, an der sich der Sprühkopf gerade befindet und/oder Auslösen einer Roboteraktion, wenn festgestellt wird, dass die Kupplung geöffnet ist.

Bevorzugte Ausgestaltungen des erfindungsgemäßen Verfahrens ergeben sich in Analogie zu den zuvor beschriebenen bevorzugten Weiterbildungen der erfindungsgemäßen IS-Maschine.

Nachfolgend wir die Erfindung anhand eines bevorzugten Ausführungsbeispiels unter Bezugnahme auf die Zeichnungen weiter im Detail erläutert.

In den Zeichnungen zeigen
Fig. 1 schematisch eine IS-Maschine gemäß einem bevorzugten Ausführungsbeispiel der Erfindung,
Fig. 2 ein Schmierwerkzeug gemäß einem bevorzugten Ausführungsbeispiel der Erfindung, bei dem die Kupplung eine Magnetkupplung ist,
Fig. 3 ein Schmierwerkzeug gemäß einem bevorzugten Ausführungsbeispiel der Erfindung, bei dem die Kupplung eine Sicherheitskupplung ist,
Fig. 4 schematisch unter anderem eine vergrößerte Darstellung des Schmierwerkzeugs aus Fig. 1 und
Fig. 5 eine vergrößerte Darstellung der Magnetkupplung des Schmierwerkzeugs aus Fig. 2.

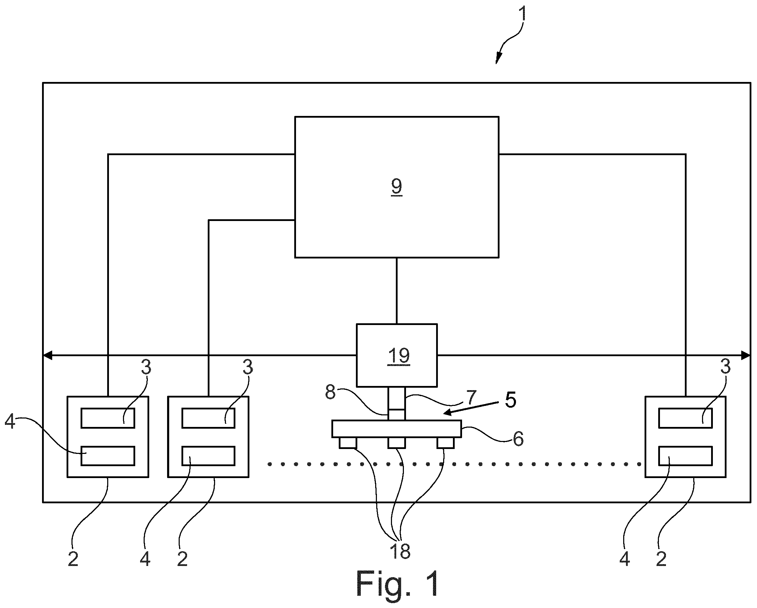

Aus Fig. 1 ist schematisch IS-Maschine 1 für die Herstellung von Glasbehältern gemäß einem bevorzugten Ausführungsbeispiel der Erfindung ersichtlich. Die IS-Maschine 1 ist mit einer Mehrzahl von Stationen 2 versehen, die jeweils eine Vorform 3 und eine Fertigform 4 aufweisen. Der Einfachheit halber sind in Fig. 1 nur drei Stationen 2 dargestellt, und die restlichen Stationen sind mit Punkten angedeutet.

Die Flächen der Vorformen 3, die mit dem schmelzflüssigen Glas unmittelbar in Berührung gelangen, bedürfen mit Hinblick auf eine gleichmäßige, im Zeitablauf konstante Produktqualität einer Schmierung, um beim Einbringen des Glaswerkstoffs in die jeweilige Vorform 3 eine gleichmäßige Verteilung innerhalb des Formhohlraums zu gewährleisten und nach erfolgter Formgebung ein Lösen des mechanisch noch instabilen Külbels aus der jeweiligen Vorform 3 zu erleichtern. Dazu weist die IS-Maschine 1 ein von einem Roboter 19 manipulierbares Schmierwerkzeug 5 zum Schmieren der Vorformen 3 mit einem Schmierstoff auf. Dafür ist das Schmierwerkzeug 5 mit drei an einer Sprühkopfhalterung 6 angeordneten Sprühköpfen 18 zum Versprühen des Schmierstoffs und einem Roboteranschluss 7 versehen, an dem die Sprühkopfhalterung 6 befestigt ist und mit dem das Schmierwerkzeug an den Roboter 19 angeschlossen ist. Wie in Fig. 1 mit einem horizontalen Doppelpfeil angedeutet, ist das Schmierwerkzeug 5 mit seinem Roboteranschluss 7 und den Sprühköpfen 18 innerhalb der IS-Maschine 1 mittels des Roboters 19 zwischen verschiedenen Stationen 2 bewegbar, so dass nacheinander die Vorformen 3 verschiedener Stationen 2 geschmiert werden können.

Wesentlich ist nun, dass die Sprühköpfe 18 mittels einer Kupplung 8 reversibel lösbar an dem Roboteranschluss 7 befestigt sind, um eine Beschädigung des Schmierwerkzeugs 5 oder des Roboters 19 bei einer Kollision mit Mechaniken einer Station 2 zu vermeiden. Es wird also eine Kupplung 8 verwendet, die sich im Fall einer Kollision öffnet, so dass die Sprühköpfe 18 vom Roboteranschluss 7 getrennt werden. Aufgrund dieser Trennung kann keine Kraftübertragung mehr auf den Roboteranschluss 7 erfolgen. Die Kupplung 8 ist so ausgestaltet, dass die Sprühkopfhalterung 6 von dem Roboteranschluss 7 reversibel lösbar ist. Die Sprühkopfhalterung 6 kann damit über die Kupplung 8 auch wieder am Roboteranschluss 7 befestigt werden, nämlich durch Schließen der Kupplung 8. Die Kupplung 8 nimmt also beim Öffnen keinen Schaden, so dass sie ohne Reparatur wieder geschlossen werden kann.

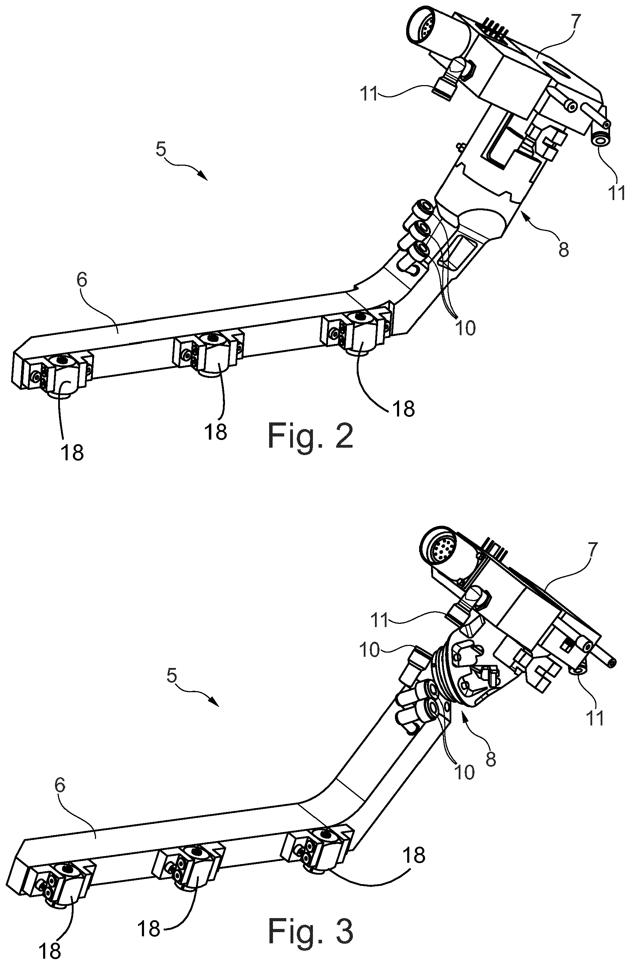

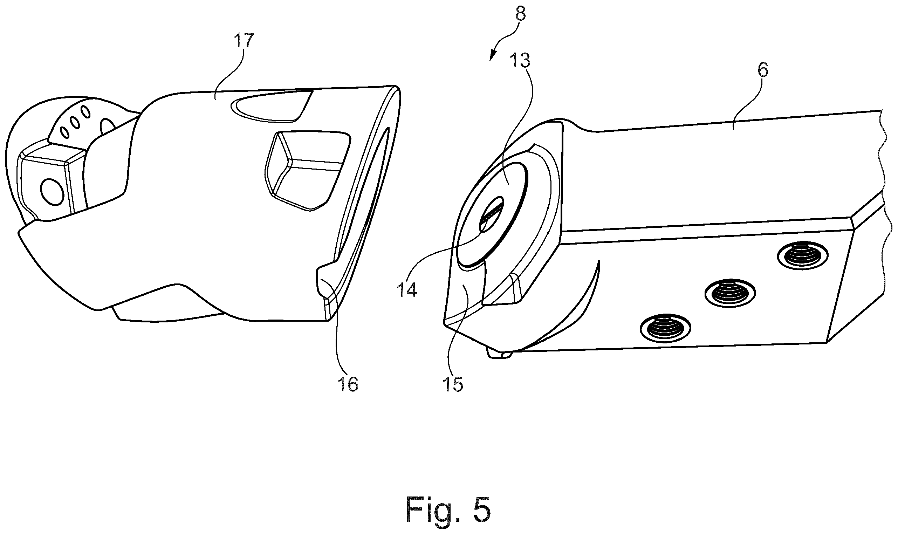

Für solche Kupplungen, die reversibel lösbar an dem Roboteranschluss 7 befestigbar sind, gibt es verschiedene Möglichkeiten. Eine dieser Möglichkeiten liegt darin, dass die Kupplung 8 eine Magnetkupplung ist. Über die Magnetkraft kann dabei eingestellt werden, bei welcher Krafteinwirkung sich die Sprühköpfe 18 von dem Roboteranschluss 7 lösen. Solche an einer Sprühkopfhalterung 6 befestigte Sprühköpfe 18, die über eine Kupplung 8, die als Magnetkupplung ausgestaltet ist, am Roboteranschluss 7 des Schmierwerkzeugs 5 befestigt sind, sind aus Fig. 2 ersichtlich. Eine vergrößerte Ansicht der als Magnetkupplung ausgestalteten Kupplung 8 ist in Fig. 5 dargestellt. Dort ist gezeigt, dass die Sprühkopfhalterung 6 an ihrem dem Roboteranschluss 7 zugewandten Ende mit einem Magneten 13 versehen ist, der mit einer Schraube 14 an der Sprühkopfhalterung 6 befestigt ist. Dieser Magnet 13 wirkt mit einem in Fig. 5 nicht sichtbaren Magneten zusammen, der auf gleiche Weise an einem am Roboteranschluss 7 angeordneten Gegenstück 17 befestigt ist. Um die richtige Orientierung der Sprühkopfhalterung 6 relativ zu dem Roboteranschluss 7 zu gewährleisten, ist der mit dem Gegenstück 17 zusammenwirkende Endbereich mit einer Rippe 15 versehen, die im geschlossenen Zustand der Kupplung 8 in eine am Gegenstück 17 vorgesehene Nut 16 eingreift.

Die Sprühkopfhalterung 6 ist mit einer Steuerluftleitung, einer Schmierstoffleitung und einer Zerstäubungsluftleitung versehen, wobei diese Leitungen alle vollständig im Inneren der Sprühkopfhalterung 6 verlaufen, so dass diese in Fig. 2 nicht sichtbar sind. Angrenzend an die Kupplung 8 sind diese Leitungen jeweils mit einem in Fig. 2 dargestellten Anschluss 10 versehen. Im Betrieb des Schmierwerkzeugs 5 ist an die Anschlüsse 10 jeweils ein Schlauch angeschlossen, der auf seiner anderen Seite mit dem Roboteranschluss 7 verbunden ist, um Steuerluft, Schmierstoff bzw. Zerstäubungsluft zu erhalten. Dazu sind am Roboteranschluss 7 ebenfalls Anschlüsse 11 vorgesehen. Der Übersichtlichkeit halber sind diese Schläuche in Fig. 2 nicht gezeigt. Diese Schläuche führen dazu, dass im Fall eines Ablösens der Sprühkopfhalterung 6 von dem Roboteranschluss 7 die Sprühkopfhalterung 6 nicht in die Station 2 fällt, an der sich das Schmierwerkzeug 5 gerade befindet, sondern vielmehr von den Schläuchen gehalten wird. Die Sprühkopfhalterung 6 kann dann händisch wieder an den Roboteranschluss 7 angesetzt werden, und die Station 2 kann weiter betrieben werden.

Eine alternative Ausgestaltung der Kupplung 8 ist aus Figur 3 ersichtlich. Dort ist dargestellt, dass die Kupplung 8 als eine Sicherheitskupplung mit einer Mechanik ausgestaltet ist, die die Sprühkopfhalterung 6 reversibel von dem Roboteranschluss 7 löst, wenn auf die Sprühkopfhalterung 6 eine Kraft wirkt, die einen vorbestimmten Kraftwert übersteigt. Eine solche Sicherheitskupplung kann z.B. nach dem Kugel-Rast-Prinzip aufgebaut sein: Die Sprühkopfhalterung 6 ist dabei formschlüssig über Kugeln oder Rollen mit dem Roboteranschluss 7 verbunden. Die Kupplungsnabe ist als Kugelkäfig ausgebildet und dient als Aufnahme eines Flanschringes, einer Schaltscheibe mit Tellerfeder und einer Einstellmutter. Die Kugeln oder Rollen werden mit einer eingestellten Federkraft in Senkbohrungen des Flanschrings gedrückt. Bei Überlast verdreht sich der Flanschring zur Käfignabe, die Kugeln werden aus der Kalotte gedrückt und die Sprühkopfhalterung 6 von dem Roboteranschluss 7 getrennt. Im Übrigen entspricht der Aufbau der in Fig. 3 gezeigten Anordnung der in Fig. 2 gezeigten.

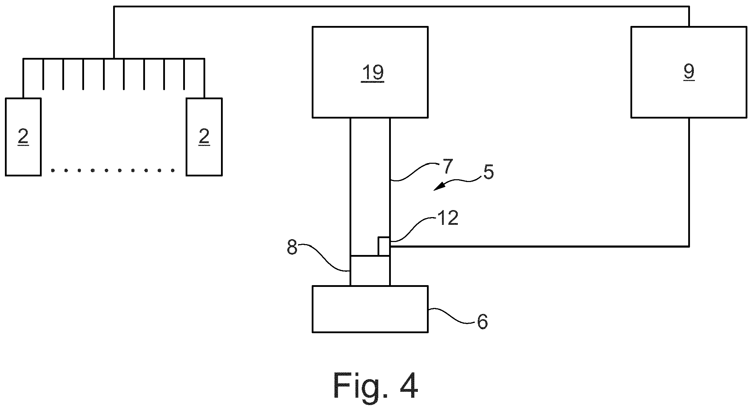

Ein wesentlicher Punkt bei den vorliegend beschriebenen Schmierwerkzeugen 5 liegt nun darin, dass das Schmierwerkzeug 5 mit einem Sensor 12 versehen ist, mit dem erfassbar ist, ob die Kupplung 8 geöffnet oder geschlossen ist. Dies ist schematisch in Fig. 4 dargestellt, die unter anderem eine vergrößerte Darstellung des Schmierwerkzeugs aus Fig. 1 zeigt. Dieser Sensor 12 kann z.B. als kapazitiver Sensor ausgestaltet sein. Dieser Sensor 12 ist mit einer auch in Fig. 1 gezeigten Schalteinrichtung 9 verbunden, mit der der Betrieb der Station 2 beendbar ist, an der sich die Sprühkopfhalterung 6 mit den Sprühköpfen 18 gerade befindet, wenn mittels des Sensors 12 festgestellt wird, dass die Kupplung 8 geöffnet ist. Diese Schalteinrichtung 9 ist darüber hinaus derart ausgestaltet und eingerichtet, dass der Betrieb der Station 2, an der sich die Sprühkopfhalterung 6 mit den Sprühköpfen 18 gerade befindet, wieder ermöglicht wird, wenn mittels des Sensors 12 festgestellt wird, dass die Kupplung 8 wieder geschlossen ist, z.B. indem die Sprühkopfhalterung 6 händisch wieder an den Roboteranschluss 7 angesetzt worden ist. Die Wiederinbetriebnahme der Station 2 erfolgt dabei aber nicht automatisch, sondern erst nach Freigabe durch einen Anwender.

Damit wird das folgende Verfahren zum Betreiben der IS-Maschine 1 ermöglicht:
Zum Schmieren der Vorformen 3 der Stationen 2 werden die Sprühköpfe 18 innerhalb der IS-Maschine 1 zwischen den verschiedenen Stationen 2 hin und her bewegt. Dabei wird erfasst, ob die Kupplung 8 geschlossen oder geöffnet ist. Kommt es nun aufgrund einer Kollision eines Sprühkopfes 18 mit einer Mechanik einer Station 2 dazu, dass die Sprühkopfhalterung 6 vom Roboteranschluss 7 gelöst wird, wird dies mittels des Sensors 12 erfasst. In einem solchen Fall erfolgt ein automatisches Beenden des Betriebs der Station 2, an der sich das Schmierwerkzeug 5 gerade befindet. Auf diese Weise kann sichergestellt werden, dass es aufgrund der abgelösten Sprühkopfhalterung 6 zu keinen weiteren Schäden an der IS-Maschine 1 oder an dem Roboter 19 kommt. Es wird eine Meldung ausgegeben, z.B. durch den Roboter 19, und die Sprühkopfhalterung 6 kann händisch wieder an den Roboteranschluss 7 angesetzt werden.

### Bezugszeichenliste

- 1: IS-Maschine
- 2: Stationen
- 3: Vorform
- 4: Fertigform
- 5: Schmierwerkzeug
- 6: Sprühkopfhalterung
- 7: Roboteranschluss
- 8: Kupplung
- 9: Schalteinrichtung
- 10: Anschlüsse an der Sprühkopfhalterung
- 11: Anschlüsse am Roboteranschluss
- 12: Sensor
- 13: Magnet
- 14: Schraube
- 15: Rippe
- 16: Nut
- 17: Gegenstück
- 18: Sprühköpfe
- 19: Roboter

## Patentansprüche

1. IS-Maschine (1) für die Herstellung von Glasbehältern, mit einer Mehrzahl von Stationen (2), die jeweils eine Vorform (3) und eine Fertigform (4) aufweisen, und einem Schmierwerkzeug (5) zum Schmieren wenigstens eines Teils der Vorformen (3) mit einem Schmierstoff, wobei das Schmierwerkzeug (5) einen Sprühkopf (18) zum Versprühen des Schmierstoffs und einen Roboteranschluss (7) aufweist, an dem der Sprühkopf (18) befestigt ist und mittels dem der Sprühkopf (18) innerhalb der IS-Maschine (1) zwischen verschiedenen Stationen (2) bewegbar ist, wobei der Sprühkopf (18) mittels einer Kupplung (8) reversibel lösbar an dem Roboteranschluss (7) befestigt ist, **dadurch gekennzeichnet, dass**
der Roboteranschluss (7) mit einem Sensor (12) versehen ist, mit dem erfassbar ist, ob die Kupplung geöffnet oder geschlossen ist, und
der Sensor (12) mit einer Schalteinrichtung (9) verbunden ist, mit der der Betrieb der Station (2) beendbar ist, an der sich der Sprühkopf (18) gerade befindet, und/oder mittels derer eine Roboteraktion auslösbar ist, wenn mittels des Sensors (12) festgestellt wird, dass die Kupplung (8) geöffnet ist.

2. IS-Maschine (1) nach Anspruch 1, **dadurch gekennzeichnet, dass** die Kupplung (8) eine Magnetkupplung ist.

3. IS-Maschine (1) nach Anspruch 1, **dadurch gekennzeichnet, dass** die Kupplung (8) eine Sicherheitskupplung mit einer Mechanik ist, die den Sprühkopf (18) reversibel von dem Roboteranschluss (7) löst, wenn auf den Sprühkopf (18) eine Kraft wirkt, die einen vorbestimmten Kraftwert übersteigt.

4. IS-Maschine (1) nach einem der Ansprüche 1 bis 3, **dadurch gekennzeichnet, dass** die Schalteinrichtung (9) derart ausgestaltet und eingerichtet ist, dass der Betrieb der Station (2), an der sich der Sprühkopf (18) gerade befindet, wieder ermöglicht wird, wenn mittels des Sensors (12) festgestellt wird, dass die Kupplung (8) wieder geschlossen ist.

5. IS-Maschine (1) nach einem der vorhergehenden Ansprüche, **dadurch gekennzeichnet, dass** der Roboteranschluss (7) mit einer Steuerluftleitung, einer Schmierstoffleitung und einer Zerstäubungsluftleitung versehen ist und wenigstens eine dieser Leitungen wenigstens teilweise im Inneren einer Sprühkopfhalterung (6) verläuft, an der der Sprühkopf befestigt ist.

6. IS-Maschine (1) nach Anspruch 5, **dadurch gekennzeichnet, dass** die Steuerluftleitung, die Schmierstoffleitung und die Zerstäubungsluftleitung alle vollständig im Inneren der Sprühkopfhalterung (6) verlaufen, angrenzend an die Kupplung (8) jeweils mit einem Anschluss (10) versehen sind und an die Anschlüsse (10) jeweils ein Schlauch angeschlossen ist, der auf seiner anderen Seite mit einem jeweiligen Anschluss (11) des Roboteranschlusses (7) verbunden ist, um den Sprühkopf (18) mit Steuerluft, Schmierstoff bzw. Zerstäubungsluft zu versorgen.

7. Verfahren zum Betreiben einer IS-Maschine (1) zur Herstellung von Glasbehältern, wobei die IS-Maschine eine Mehrzahl von Stationen (2), die jeweils eine Vorform (3) und eine Fertigform (4) aufweisen, und ein Schmierwerkzeug (5) zum Schmieren wenigstens eines Teils der Vorformen (3) mit einem Schmierstoff aufweist, wobei das Schmierwerkzeug (5) einen Sprühkopf (18) zum Versprühen des Schmierstoffs und einen Roboteranschluss (7) aufweist, an dem der Sprühkopf (18) befestigt ist, und der Roboteranschluss (7) mit einem Sensor (12) versehen ist, mit dem erfassbar ist, ob die Kupplung geöffnet oder geschlossen ist, wobei der Sprühkopf (18) mittels einer Kupplung (8) reversibel lösbar an dem Roboteranschluss (7) befestigt ist, mit folgenden Verfahrensschritten:
Bewegen des Sprühkopfs (18) innerhalb der IS-Maschine (1) zwischen verschiedenen Stationen (2) und Schmieren einer jeweiligen Vorform (3),
Erfassen mittels des Sensors (12), ob die Kupplung (8) geschlossen oder geöffnet ist, und
Beenden des Betriebs der Station (2), an der sich der Sprühkopf (18) gerade befindet und/oder Auslösen einer Roboteraktion, wenn festgestellt wird, dass die Kupplung (8) geöffnet ist.

## Claims

1. IS machine (1) for the production of glass containers, comprising:
a plurality of stations (2), each comprising a pre-mold (3) and a finish mold (4); and
a lubricating tool (5) for lubricating at least a part of the pre-molds (3) with a lubricant,
wherein the lubricating tool (5) comprises a spray head (18) for spraying the lubricant and a robot connection (7) to which the spray head (18) is attached and by means of which the spray head (18) can be moved within the IS machine (1) between different stations (2), wherein the spray head (18) is reversibly detachably attached to the robot connection (7) by means of a coupling (8),
**characterized in that**
the robot connection (7) is provided with a sensor (12) by means of which it is possible to detect whether the coupling is open or closed; and
the sensor (12) is connected to a switching device (9) by means of which the operation of the station (2) at which the spray head (18) is currently located can be terminated and/or by means of which a robot action can be triggered if it is determined by means of the sensor (12) that the coupling (8) is open.

2. IS machine (1) according to claim 1, **characterized in that** the clutch (8) is a magnetic clutch.

3. IS machine (1) according to claim 1, **characterized in that** the clutch (8) is a safety clutch comprising a mechanism which releases the spray head (18) reversibly from the robot connection (7) if a force exceeding a predetermined force value acts on the spray head (18).

4. IS machine (1) according to any one of claims 1 to 3, **characterized in that** the switching device (9) is configured and arranged in such a way that the operation of the station (2), at which the spray head (18) is currently located, is enabled again when it is determined by means of the sensor (12) that the clutch (8) is closed again.

5. IS machine (1) according to any one of the preceding claims, **characterized in that** the robot connection (7) is provided with a control air line, a lubricant line and an atomization air line and at least one of these lines extends at least partially inside a spray head holder (6) to which the spray head is attached.

6. IS machine (1) according to claim 5, **characterized in that** the control air line, the lubricant line and the atomizing air line all extend completely inside the spray head holder (6), are each provided with a connection (10) adjacent to the coupling (8) and a hose is connected to each of the connections (10), which hose is connected at its other side to a respective connection (11) of the robot connection (7) in order to supply the spray head (18) with control air, lubricant and atomizing air, respectively.

7. Method for operating an IS machine (1) for producing glass containers, wherein the IS machine comprises:
a plurality of stations (2), each comprising a pre-mold (3) and a finish mold (4); and
a lubricating tool (5) for lubricating at least a part of the pre-molds (3) with a lubricant,
wherein the lubricating tool (5) comprises a spray head (18) for spraying the lubricant and a robot connection (7) to which the spray head (18) is attached, and wherein the robot connection (7) is provided with a sensor (6) by means of which it is possible to detect whether the coupling is open or closed, wherein the spray head (18) is reversibly detachably attached to the robot connection (7) by means of a coupling (8);
including the following method steps:
moving the spray head (18) within the IS machine (1) between different stations (2) and lubricating a respective pre-mold (3);
detecting by means of the sensor (12) whether the coupling (8) is closed or open; and
terminating the operation of the station (2) at which the spray head (18) is currently located and/or triggering a robot action when it is detected that the coupling (8) is open.

## Revendications

1. Machine de section individuelle, IS, (1) permettant la fabrication de récipients en verre, avec une multiplicité de postes (2) qui présentent respectivement une préforme (3) et une forme finie (4), et un outil de lubrification (5) permettant de lubrifier au moins une partie des préformes (3) avec un lubrifiant, où l'outil de lubrification (5) présente une tête de pulvérisation (18) permettant la pulvérisation du lubrifiant et un raccordement à un robot (7), sur lequel la tête de pulvérisation (18) est fixée et au moyen duquel la tête de pulvérisation (18) peut être déplacée à l'intérieur de la machine IS (1) entre différents postes (2), où la tête de pulvérisation (18) est fixée de manière réversible et amovible sur le raccordement au robot (7) au moyen d'un accouplement (8), **caractérisée en ce que**
le raccordement au robot (7) est muni d'un capteur (12) avec lequel on peut détecter si l'accouplement est ouvert ou fermé, et
le capteur (12) est relié avec un dispositif de commande (9) avec lequel le fonctionnement du poste (2), sur lequel se trouve précisément la tête de pulvérisation (18), peut être arrêté, et/ou au moyen duquel une action du robot peut être déclenchée lorsque l'on constate au moyen du capteur (12) que l'accouplement (8) est ouvert.

2. Machine IS (1) selon la revendication 1, **caractérisée en ce que** l'accouplement (8) est un accouplement magnétique.

3. Machine IS (1) selon la revendication 1, **caractérisée en ce que** l'accouplement (8) est un accouplement de sécurité avec une mécanisme qui enlève la tête de pulvérisation (18) de manière réversible du raccordement au robot (7) lorsqu'une force dépassant une valeur de force prédéterminée agit sur la tête de pulvérisation (18).

4. Machine IS (1) selon l'une des revendications 1 à 3, **caractérisée en ce que** le dispositif de commande (9) est conçu et réalisé de telle manière que le fonctionnement du poste (2) où se trouve précisément la tête de pulvérisation (18) est de nouveau rendu possible lorsque l'on constate au moyen du capteur (12) que l'accouplement (8) est de nouveau fermé.

5. Machine IS (1) selon l'une des revendications précédentes, **caractérisée en ce que** le raccordement au robot (7) est muni d'une conduite d'air de commande, d'une conduite de lubrifiant et d'une conduite d'air d'atomisation et au moins une de ces conduites s'étend au moins partiellement à l'intérieur d'un support de tête de pulvérisation (6) sur lequel la tête de pulvérisation est fixée.

6. Machine IS (1) selon la revendication 5, **caractérisée en ce que** la conduite d'air de commande, la conduite de lubrifiant et la conduite d'air d'atomisation s'étendent toutes totalement à l'intérieur du support de tête de pulvérisation (6), sont respectivement munies avec un raccordement (10) à la limite de l'accouplement (8) et un tuyau, qui est relié au niveau de son autre côté avec un raccord (11) respectif du raccordement au robot (7), est respectivement raccordé aux raccordements (10), afin d'alimenter la tête de pulvérisation (18) avec de l'air de commande, du lubrifiant, respectivement de l'air d'atomisation.

7. Procédé de mise en oeuvre d'une machine IS (1) permettant la fabrication de récipients en verre, dans lequel la machine IS présente une multiplicité de postes (2) qui présentent respectivement une préforme (3) et une forme finie (4), et un outil de lubrification (5) permettant de lubrifier au moins une partie des préformes (3) avec un lubrifiant, où l'outil de lubrification (5) présente une tête de pulvérisation (18) permettant la pulvérisation du lubrifiant et un raccordement à un robot (7), sur lequel la tête de pulvérisation (18) est fixée, et le raccordement au robot (7) est pourvu d'un capteur (12) avec lequel on peut détecter si l'accouplement est ouvert ou fermé, où la tête de pulvérisation (18) est fixée de manière réversible et amovible sur le raccordement au robot (7) au moyen d'un accouplement (8), avec les étapes de procédé suivantes :
déplacement de la tête de pulvérisation (18) à l'intérieur de la machine IS (1) entre différents postes (2) et lubrification d'une préforme (3) respective,
détection au moyen du capteur (12) si l'accouplement (8) est fermé ou ouvert, et
arrêt du fonctionnement du poste (2) où se trouve précisément la tête de pulvérisation (18) et/ou déclenchement d'une action du robot lorsqu'on constate que l'accouplement (8) est ouvert.
